# EUROPEAN PATENT SPECIFICATION

(11) **EP 1 478 252 B1**
(45) Date of publication and mention of the grant of the patent: **15.11.2006**
(21) Application number: 03702643.2
(22) Date of filing: 14.02.2003
(51) Int. Cl.: A43B 13/04, B29D 31/51, B29D 31/518

(54) **METHOD FOR MANUFACTURING A SOLE FOR SHOES, COMPOSED OF A TREAD SOLE MADE OF VULCANIZED RUBBER COUPLED TO A POLYURETHANE MID-SOLE**
HERSTELLUNGSVERFAHREN EINER SCHUHSOHLE BESTEHEND AUS EINER LAUFSOHLE AUS VULKANISIERTEM KAUTSCHUK UND EINER MITTELSOHLE AUS POLYURETHAN
PROCEDE POUR FABRIQUER UNE SEMELLE DE CHAUSSURE COMPORTANT UNE SEMELLE D'USURE EN CAOUTCHOUC VULCANISE, ASSOCIEE A UNE SEMELLE INTERCALAIRE EN POLYURETHANNE

(30) Priority: 27.02.2002 IT PD20020051
(43) Date of publication of application: 24.11.2004
(73) Proprietor: Main Group S.p.A., 35129 Padova (IT)
(72) Inventor: LORENZIN, Lorenzo, I-35031 Abano Terme (IT)
(74) Representative: Modiano, Micaela Nadia
(86) International application number: PCT/EP2003/001510
(87) International publication number: WO 2003/071891

(56) References cited:
- EP-A- 0 311 120
- WO-A-02/052971
- DE-A- 3 616 874
- GB-A- 2 184 638
- US-A- 4 245 406

## Description

### Technical Field

The present invention relates to the manufacture of a sole for shoes that is composed of a tread sole made of vulcanized rubber coupled to a polyurethane mid-sole.

### Background Art

The problems encountered in joining vulcanized rubber and polyurethane are known; these two materials, at least the ones used up to now, are in fact substantially mutually incompatible and particular techniques are necessary in order to associate them.

GB 2 184 638 A discloses a method whereby an adhesive layer is not used.

Rubber mixtures, developed specifically for coupling to polyurethane (free from oily substances which, once the rubber has been vulcanized, migrate to the surface) are first vulcanized for times and at temperatures required for currently commercially available mixtures (approximately 170°C).

The soles are then washed with solvents in order to remove the residues of release agent, dust and contamination caused by handling by the operators (fatty substances of the skin).

The next step is drying, in order to eliminate the traces of solvent that can compromise the action of the primer applied in the subsequent step.

Then a chlorine-based primer is applied (halogenation) by spraying onto the inner surface of the tread, which will then make contact with the polyurethane.

The presence of the primer based on chlorinated substances is currently indispensable for the subsequent steps and therefore to achieve coupling between the rubber tread and the polyurethane mid-sole.

The subsequent step consists in resting for 24 hours at a constant temperature in order to ensure that the primer is completely absorbed by the rubber (the action of the primer consists in modifying chemically the surface of the rubber, "activating" it).

Once the above resting step has ended, a polyurethane-based adhesive is sprayed and the adhesive is then left to dry for a period between a few hours and a day at ambient temperature (depending on the vapor pressure of the solvent of the adhesive).

It is necessary to be certain that the adhesive is dry before the polyurethane can be poured onto it.

The tread sole is then ready to be positioned in the mold.

Inside the mold, the adhesive is activated by irradiation with an IR lamp (heat shock) and polyurethane is finally injected or poured.

A similar method is disclosed by US 4 245 406.

This manufacturing technique clearly has a number of problems: the need to prepare the tread soles separately from the polyurethane molding apparatus and to store them due to production logistics reasons; the need to let the tread soles cool at least until they reach a temperature that is compatible with the polyurethane molding pressure; the need, due to storage, for washing with a solvent that is expensive and employs toxic products; the need to allow elapsing of a relatively long time that is not compatible with continuous production after application of the primer; the need to let the adhesive dry after spraying; the need to allow the adhesive time (considerable time) to self-activate.

As an alternative to treatment with a primer, other solutions have been adopted which entail for example positioning between the vulcanized rubber and the polyurethane a felt that must be compatible with both materials.

In view of the problems mentioned above, it is evident that the tread sole made of vulcanized rubber cannot be prepared in the same production cycle as the sole or shoe, but must be prepared first and separately, allowed to cool and then subjected to surface treatment.

In the other cases, an accessory component must be used.

The production of shoes with a vulcanized rubber tread and a polyurethane mid-sole is therefore scarcely convenient and excessively expensive.

On the other hand, the advantages of a sole with a vulcanized rubber tread and a remaining part (mid-sole) made of polyurethane would be considerable, since a vulcanized rubber tread is highly resistant to wear and thermal abrasion and a polyurethane mid-sole is very light and comfortable.

### Disclosure of the invention

The aim of the present invention is to provide, in a same operating cycle, a sole with a vulcanized rubber tread that is coupled to a polyurethane mid-sole.

Within this aim, an object of the invention is to provide a method that does not require holding times between the preparation of the vulcanized rubber sole and the subsequent coupling to a polyurethane mid-sole formed within a mold.

A further object is to provide a method that does not require treatment of the vulcanized rubber sole before injecting or pouring the polyurethane into the mold.

This aim and these and other objects that will become better apparent hereinafter are achieved by a method for manufacturing a sole for shoes, composed of a tread sole made of vulcanized rubber that is coupled to a polyurethane mid-sole, comprising the steps, performed continuously in a mold, of:
-- molding the rubber tread;
-- applying directly to said rubber tread, during vulcanization, an adhesive constituted by an aqueous dispersion of thermoplastic polyurethane combined with an activator that causes the crosslinking of the thermoplastic polyurethane;
-- causing the evaporation of the water dispersed in said adhesive;
-- depositing the polyurethane that constitutes the mid-sole on said vulcanized rubber tread.

Advantageously, such activator that causes the crosslinking of the polyurethane is a compound based on isocyanate treated so as to be less reactive with water.

Further characteristics and advantages of the invention will become better apparent from the following detailed description of the steps of execution of the method, which is given hereafter by way of non-limitative example.

### Ways of carrying out the Invention

The method for manufacturing a sole for shoe composed of a vulcanized rubber tread sole coupled to a polyurethane mid-sole comprises a first step, in which a rubber is vulcanized that has a mixture as disclosed in WO 02/052971 in the name of the same Applicant and composed of:
a₁) a vulcanizable nitrile rubber (NBR);
a₂) at least one hydroxylated acrylic resin;
a₃) at least one hydrocarbon resin;
a₄) at least one reinforcing filler;
a₅) at least one vulcanization accelerator.

The nitrile rubber that is used is conveniently of the medium-high nitrile type with low Mooney value (low viscosity).

A rubber of this type is a butadiene-acrylonitrile copolymer that is technically known by the acronym NBR.

The mixture contains a hydroxylated acrylic resin, i.e., a polyacrylic resin with an OH content of less than 2.

Such resin is preferably employed in a solvent and its percentage by weight is between 4 and 6% of the overall weight of the mixture.

The mixture further comprises a hydrocarbon resin of the family of aliphatic resins of petrochemical origin.

Such hydrocarbon resin, preferably in the solid state, is present in a percentage by weight of 3 to 5% with respect to the overall weight of the mixture.

The hydrocarbon resin is a combination of C₅ hydrocarbon chains.

A siliceous reinforcing filler is also added to the mixture.

Such reinforcing filler is preferably precipitated amorphous silica, or is a mixture containing 85 to 90% SiO₂ with a BET value of 150 to 200 m²/gr.

The reinforcing filler is present in a percentage by weight from 20 to 25% of the overall weight of the mixture.

The vulcanization accelerator is of the class of mercaptans, with the addition of an ultra accelerator of the thiuram class.

The accelerator is introduced in the mixture in a percentage by weight between 1 and 1.5% of the overall weight of the mixture.

The mixture described above is deposited in the mold for example by means of an injection-pouring unit (temperature: 60-70 °C depending on environmental conditions) and then vulcanized preferably at 130 °C for 3 minutes.

Conveniently, the variations in thickness of the rubber tread sole must not be greater than 10%, in order to avoid compromising the uniformity of the degree of vulcanization.

The subsequent step is the application of an adhesive according to the invention with a spray gun, preferably depositing a quantity of 3-4 grams per sole.

It is necessary to ensure the constancy of the thickness of adhesive film along the entire surface to be bonded by adhesive.

The adhesive is a bonding agent constituted by an aqueous dispersion of thermoplastic polyurethane, combined with a compound based on isocyanate treated to be less reactive with water.

The two components are mixed by the user before use, depending on the reactivity of the isocyanate-based compound, which acts as an activator, causing the crosslinking of the polyurethane component.

The dispersion is preferably 1 part of polyurethane adhesive and 0.5 parts of water.

Advantageously, the isocyanate-based compound is approximately 3-4% by weight and comprises a quantity between 0.40 and 0.45% by weight of hexamethylene diisocyanate and less than 95% by weight of aliphatic polyisocyanate.

Since the isocyanate-based compound reacts with water (and the adhesive is an aqueous dispersion of polyurethane), as mentioned earlier it is convenient to treat it so as to reduce its reactivity and therefore extend the time by which it must be used.

The ratios of dilution with water depend in any case on the layer of film of adhesive on the surface of the rubber tread sole; if the adhesive is diluted excessively when it is sprayed, it atomizes excessively and does not cling well to the surface of the tread sole, forming large drops.

If the product is instead excessively concentrated, uniform distribution on the surface does not occur.

Conveniently, it is possible to use as an adhesive a polyurethane component known as 9620/DD, of the company F.lli Zucchini of Ferrara, and as a treated isocyanate-based compound for example the one commercially known as ATTIVATORE VKD, again of the company F.lli Zucchini of Ferrara, which has a pot life of 8 hours (time for which the adhesive remains efficient) and requires complete replenishment after 4 hours.

This adhesive is currently known in a technical field that is very different from the field of shoe-making machines, i.e., for use in the joining of PVC claddings to MDF panels.

The water contained in the dispersion of adhesive evaporates due to the heat supplied by the freshly vulcanized rubber (the head is supplied indirectly by the mold by means of the rubber tread) and by irradiation with an IR lamp (for example, with a 6000 W lamp the exposure time can be between 5 and 15 sec).

The step of forced drying of the adhesive is recommended in order to shorten the normal drying times, which are between 30 and 40 minutes at ambient temperature for the 9620/DD adhesive in the known use for joining PVC claddings to MDF panels; such values are not suitable for the mass production of shoe soles.

The final step is the injection or pouring of the polyurethane that constitutes the mid-sole.

As clearly shown, the preparation of the rubber tread sole and the subsequent operation for coupling with the polyurethane mid-sole occur in the same machine and with an operating cycle in which the steps occur continuously one after the other, without idle times or pauses.

The step of storage and therefore of washing pretreatment, and the application of the chlorine-based primer (halogenation), which among other issues entails severe risks for the health of the operator and problems of corrosion of mechanical components, are eliminated.

From what has been described and illustrated it is evident that the intended aim and all of the objects have been achieved, and that in particular a tread sole made of vulcanized rubber coupled to a polyurethane mid-sole has been provided and that all of the above occurs with a succession of steps that can be performed in a single machine and sequentially.

Clearly, starting from the same inventive concept, equivalent components may be used.

## Claims

1. A method for manufacturing a sole for shoes, composed of a tread sole made of vulcanized rubber that is coupled to a polyurethane mid-sole, comprising the steps, performed continuously in a mold, of:
-- molding the rubber tread;
-- applying directly to said rubber tread, during vulcanization, an adhesive constituted by an aqueous dispersion of thermoplastic polyurethane combined with an activator that causes the crosslinking of the thermoplastic polyurethane;
-- causing the evaporation of the water dispersed in said adhesive;
-- depositing the polyurethane that constitutes said mid-sole on said vulcanized rubber tread.

2. The method according to claim 1, wherein said aqueous dispersion of thermoplastic polyurethane is 1 part of polyurethane and 0.5 parts of water.

3. The method according to claim 1, wherein said activator that causes the cross-linking of polyurethane is a compound based on isocyanate treated to have less reactivity with water.

4. The method according to claim 3, wherein said isocyanate-based compound is approximately 3-4% by weight.

5. The method according to claim 4, wherein said isocyanate-based compound comprises an amount substantially between 0.40 and 0.45% by weight of hexamethylene diisocyanate and less than 95% by weight of aliphatic polyisocyanate.

6. The method according to claim 1, wherein said adhesive is applied in an amount of substantially 3-4 grams per sole.

7. The method according to claim 1, wherein the step of causing the evaporation of the water dispersed in the adhesive comprises making said water evaporate by conduction and irradiation/convection with an external device.

8. The method according to claim 7, wherein said irradiation is performed with a lamp having a power of 6000 W for a time between 5 and 15 seconds.

9. The method according to claim 1, wherein said adhesive is applied with a spray gun.

10. Use, as an adhesive in a method for manufacturing a sole for shoes composed of a tread sole made of vulcanized rubber coupled to a polyurethane mid-sole, of a bonding agent composed of an aqueous dispersion of thermoplastic polyurethane combined with an activator that causes the cross-linking of the polyurethane.

11. The use according to claim 10, wherein said aqueous dispersion of thermoplastic polyurethane is 1 part of polyurethane and 0.5 parts of water.

12. The use according to claim 10, wherein said activator that causes the cross-linking of the polyurethane is a compound based on isocyanate, treated so as to be less reactive with water.

13. The use according to claim 12, wherein said isocyanate-based compound is approximately 3-4% by weight.

14. The use according to claim 13, wherein said isocyanate-based compound comprises a quantity substantially between 0.40 and 0.45% by weight of hexamethylene diisocyanate and less than 95% by weight of aliphatic polyisocyanate.

## Patentansprüche

1. Verfahren zur Herstellung einer Sohle für Schuhe, gebildet aus einer Laufsohle aus vulkanisiertem Kautschuk, die an eine Polyurethanmittelsohle gekoppelt ist, umfassend die Schritte, die kontinuierlich in einer Form durchgeführt werden:
- Formen der Gummilauffläche;
- Auftragen eines Klebstoffs, der aus einer wässrigen Dispersion von thermoplastischem Polyurethan kombiniert mit einem Aktivator gebildet ist, der das Vernetzen des thermoplastischen Polyurethans bewirkt, direkt auf die Gummilauffläche, während der Vulkanisation;
- Bewirken, dass im Klebstoff dispergiertes Wasser verdampft;
- Auflegen des Polyurethans, das die Mittelsohle bildet, auf die vulkanisierte Gummilauffläche.

2. Verfahren nach Anspruch 1, worin die wässrige Dispersion von thermoplastischem Polyurethan aus 1 Teil Polyurethan und 0,5 Teilen Wasser besteht.

3. Verfahren nach Anspruch 1, worin der Aktivator, der das Vernetzen des Polyurethans bewirkt, eine Verbindung auf Basis von Isocyanat ist, die so behandelt ist, dass sie geringere Reaktivität mit Wasser aufweist.

4. Verfahren nach Anspruch 3, worin die Verbindung auf Isocyanatbasis ungefähr 3-4 Gewichts-% beträgt.

5. Verfahren nach Anspruch 4, worin die Verbindung auf Isocyanatbasis eine Menge von im Wesentlichen zwischen 0,40 und 0,45 Gewichts-% Hexamethylendiisocyanat und weniger als 95 Gewichts-% aliphatisches Polyisocyanat umfasst.

6. Verfahren nach Anspruch 1, worin der Klebstoff in einer Menge von im Wesentlichen 3-4 Gramm pro Sohle aufgebracht wird.

7. Verfahren nach Anspruch 1, worin der Schritt zum Bewirken, dass das im Klebstoff dispergierte Wasser verdampft, Verdampfen lassen des Wassers durch Konduktion und Bestrahlung/Konvektion mit einer externen Vorrichtung umfasst.

8. Verfahren nach Anspruch 7, worin die Bestrahlung mit einer Lampe mit einer Leistung von 6000 W über eine Dauer zwischen 5 und 15 Sekunden durchgeführt wird.

9. Verfahren nach Anspruch 1, worin der Klebstoff mit einer Spritzpistole aufgetragen wird.

10. Verwendung eines Bindemittels als Klebstoff in einem Verfahren zur Herstellung einer Sohle für Schuhe, gebildet aus einer Laufsohle aus vulkanisiertem Kautschuk, die an eine Polyurethanmittelsohle gekoppelt ist, wobei das Bindemittel gebildet ist aus einer wässrigen Dispersion von thermoplastischem Polyurethan kombiniert mit einem Aktivator, der das Vernetzen des Polyurethans bewirkt.

11. Verwendung nach Anspruch 10, worin die wässrige Dispersion von thermoplastischem Polyurethan aus 1 Teil Polyurethan und 0,5 Teilen Wasser besteht.

12. Verwendung nach Anspruch 10, worin der Aktivator, der das Vernetzen des Polyurethans bewirkt, eine Verbindung auf Basis von Isocyanat ist, die so behandelt ist, dass sie geringere Reaktivität mit Wasser aufweist.

13. Verwendung nach Anspruch 12, worin die Verbindung auf Isocyanatbasis ungefähr 3-4 Gewichts-% beträgt.

14. Verwendung nach Anspruch 13, worin die Verbindung auf Isocyanatbasis eine Menge von im Wesentlichen zwischen 0,40 und 0,45 Gewichts-% Hexamethylendiisocyanat und weniger als 95 Gewichts-% aliphatisches Polyisocyanat umfasst.

## Revendications

1. Procédé pour la fabrication d'une semelle de chaussure, composée d'une semelle d'usure réalisée en caoutchouc vulcanisé qui est associée à une semelle intermédiaire en polyuréthane, comprenant les étapes, réalisées en continu dans un moule, consistant à:
- mouler la semelle caoutchoutée;
- appliquer directement à ladite semelle caoutchoutée, pendant la vulcanisation, un adhésif constitué par une dispersion aqueuse de polyuréthane thermoplastique combinée à un activateur qui provoque la réticulation du polyuréthane thermoplastique;
- provoquer l'évaporation de l'eau dispersée dans ledit adhésif;
- déposer le polyuréthane qui constitue ladite semelle intermédiaire sur ladite semelle caoutchoutée vulcanisée.

2. Procédé selon la revendication 1, dans lequel ladite dispersion aqueuse de polyuréthane thermoplastique est de 1 part de polyuréthane et de 0,5 parts d'eau.

3. Procédé selon la revendication 1, dans lequel ledit activateur qui provoque la réticulation du polyuréthane est un composé à base d'isocyanate traité pour présenter moins de réactivité avec l'eau.

4. Procédé selon la revendication 3, dans lequel ledit composé à base d'isocyanate est approximativement de 3 à 4% par poids.

5. Procédé selon la revendication 4, dans lequel ledit composé à base d'isocyanate comprend une quantité sensiblement comprise entre 0,40 et 0,45 % par poids de diisocyanate d'héxaméthylène et moins de 95% par poids de polyisocyanate aliphatique.

6. Procédé selon la revendication 1, dans lequel ledit adhésif est appliqué dans une quantité sensiblement comprise entre 3 et 4 grammes par semelle.

7. Procédé selon la revendication 1, dans lequel l'étape consistant à provoquer l'évaporation de l'eau dispersée dans l'adhésif comprend le fait de faire évaporer l'eau par conduction et irradiation/convection par l'intermédiaire d'un dispositif externe.

8. Procédé selon la revendication 7, dans lequel ladite irradiation est réalisée avec une lampe ayant une puissance de 6000 W pendant un temps compris entre 5 et 15 secondes.

9. Procédé selon la revendication 1, dans lequel ledit adhésif est appliqué par un pistolet pulvérisateur.

10. Utilisation, tel qu'un adhésif dans un procédé pour la fabrication d'une semelle de chaussure composée d'une semelle d'usure réalisée en caoutchouc vulcanisé associée à une semelle intercalaire en polyuréthane, d'un agent de liaison composé d'une dispersion aqueuse de polyuréthane thermoplastique combiné à un activateur qui provoque la réticulation du polyuréthane.

11. Utilisation selon la revendication 10, dans laquelle ladite dispersion aqueuse de polyuréthane thermoplastique est de 1 part de polyuréthane et de 0,5 parts d'eau.

12. Utilisation selon la revendication 10, dans laquelle ledit activateur qui provoque la réticulation du polyuréthane est un composé à base d'isocyanate, traité de façon à être moins réactif avec l'eau.

13. Utilisation selon la revendication 12, dans laquelle ledit composé à base d'isocyanate est approximativement de 3 à 4% par poids.

14. Utilisation selon la revendication 13, dans laquelle ledit composé à base d'isocyanate comprend une quantité sensiblement comprise entre 0,40 et 0,45 % par poids de diisocyanate d'héxaméthylène et moins de 95% par poids de polyisocyanate aliphatique.
